# EUROPÄISCHE PATENTSCHRIFT

(11) **EP 0 589 835 B1**
(45) Veröffentlichungstag und Bekanntmachung des Hinweises auf die Patenterteilung: **06.08.1997**
(21) Anmeldenummer: 93810646.5
(22) Anmeldetag: 10.09.1993
(51) Int. Cl.: B29C 70/00, B29D 23/24, B26D 3/06, B26D 3/08, B29C 65/34, F16L 47/02

(54) **Thermoelektrische Schweissverbindung von thermoplastischen Materialien**
Thermoelectric welded joint of thermoplastic materials
Liaison par soudage thermoélectrique de matières thermoplastiques

(30) Priorität: 22.09.1992 CH 2959/92
(43) Veröffentlichungstag der Anmeldung: 30.03.1994
(73) Patentinhaber: Streng Plastic AG, CH-8155 Niederhasli (CH)
(72) Erfinder: Streng, Alfred, CH-8155 Niederhasli (CH)
(74) Vertreter: Frei, Alexandra Sarah

(56) Entgegenhaltungen:
- EP-A- 0 086 359
- EP-A- 0 119 738
- EP-A- 0 302 845
- EP-A- 0 449 795
- EP-A- 0 453 208
- FR-A- 2 388 930
- GB-A- 2 040 013
- GB-A- 2 137 298
- US-A- 2 972 789
- PATENT ABSTRACTS OF JAPAN vol. 9, no. 144 (P-365)(1867) 19. Juni 1985 & JP-A-60 024 503 (SEISAN NIHONSHIYA) 7. Februar 1985

## Beschreibung

Die Erfindung betrifft ein Herstellungsverfahren für elektroschweissbare Oberflächen an Materialien aus thermoplastischem Kunststoff, sowie nach dem Verfahren hergestellte Gegenstände.

Die Funktionstauglichkeit von bspw. elektroschweissbaren Rohrleitungsteilen bzw. Elektroschweissfittings, also Elektroschweissmuffen oder Elektroschweissringe, wie sie zum Bau von Rohrleitungen aus thermoplastischen Kunststoffen zur Anwendung kommen, hängt im wesentlichen von der Lage des Heizleiters in Bezug für die Rohrverbindung massgebenden Innenfläche des Muffenkörpers und der Aussenfläche des Rohrkörpers ab. Ein weiteres wichtiges Kriterium ist, dass der Heizleiter im Fittingkörper so eingebettet ist, dass die gesamte Heizdrahtoberfläche zur unmittelbaren Wärmeübertragung an den in der Fügezone für die Verschweissung von Rohr und Rohrleitungsteil in Form von thermoplastischer Schmelze benötigten Materialanteil beteiligt ist. Zudem muss der Heizleiter im Fittingmaterial so stabil verankert sein, dass die Wärmedehnung des Heizdrahtmaterials während der Energieeingabe im mehr und mehr sich aufweichenden bzw. aufschmelzenden Umgebungsmaterial nicht zu unkontrollierten Drahtbewegungen in hauptsächlich achsialer Richtung der Rohrverbindung führt, was zu örtlicher Ueberhitzung führende Kurzschlussberührung von einzelnen Drahtwindungen führen könnte.

Zusammengefasst ergeben sich für einen gut funktionierenden elektroschweissbaren Fitting an die Mechanismen der Energie-Einbringung folgende Anforderungen:
- Der Heizleiter soll mit masslich festgelegtem, möglichst geringem Abstand zur Fügefläche im Fittingkörper liegen.
- Der Heizleiter soll, ohne nennenswerte Lufteinschlüsse, vom Fittingmaterial vollständig umhüllt sein. Isolierende Luft führt zu Zonen von überhitzten Drahtoberflächen.
- Die Fügefläche soll nach dem Einbringen des Heizleiter eine möglichst glatte, gleichmässige Oberfläche aufweisen. Rillen und wulstförmige Kämme die durch zusätzliche isolierende Luftschichten zwischen den zu verschweissenden Oberflächen den Aufschmelzvorgang stören und überdies ein erhebliches Risiko von Lufteinschlüssen (Lunker) beim Schweissvorgang bilden, sind nicht erwünscht.

Mit dieser Forderung werden auch elektrisch verschweisste Zonen auf beliebig geformten Oberflächen, also Sattelflächen, Ebenen usw. befriedigende Resultate ergeben. Diese Forderungen können als generell für Verschweissung von Thermoplasten mittels eingebetteten Heizdrähten betrachtet werden. Da Kunststoff nur unter Druck verschweisst, muss ausserdem die Erzeugung eines ausreichenden Schmelzdruckes bzw. Fügedruckes gesichert sein, was ebenfalls ein wichtiges Kriterium (Temperatur, Zeit, Fügedruck) für die Schweissqualität ist.

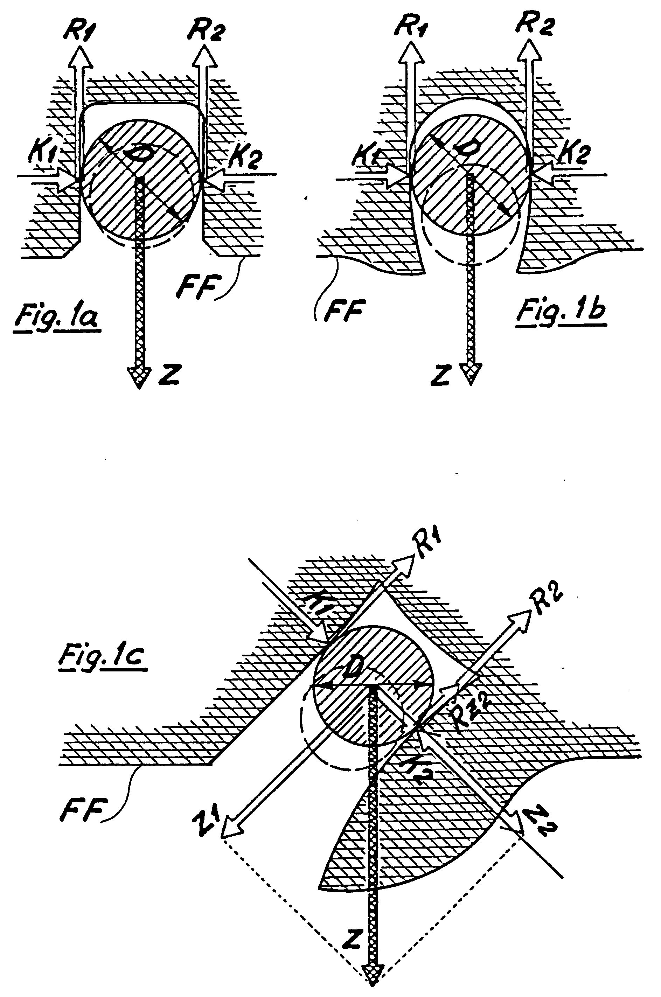

So beschreibt bspw. die Schweizer Patentschrift CH 515449 zur Herstellung von Elektroschweissmuffen verschiedene konstruktive Ansätze mit der Hauptzielsetzung, den Heizleiterdraht gegen Berührung zu schützen. Bei dieser relativ frühen Technologie werden bei keiner der in Fig. 1 bis 7 gezeigten Varianten alle Kriterien der oben angegebenen Anforderungen erfüllt, vielmehr bleibt ein grosser Abstand des Heizleiters von der Fügefläche und/oder eine mangelhafte Verankerung des Heizleiters im Muffenkörper mit unakzeptablen Hohlräumen und Lufteinschlüssen bestehen.

Weitere beispielhafte Verbesserungsvorschläge von Verfahren mit zugehörigen Vorrichtungen werden in den europäischen Patentschriften EP 0058175, EP 0086359 und EP 0453208 beschrieben. Der Heizleiter wird in einen Arbeitsgang in einen hülsenförmigen Muffenkörper aus thermoplastischem Kunststoff eingelegt. Mit einem, die Schneidengeometrie betreffend, nicht näher präzisierten Schneidewerkzeug, wird die Innenfläche der Bohrung des Muffenkörpers zu einer spiralförmigen Nut aufgeschnitten und gleichzeitig durch eine, dem Heizleiterdraht angepasste Führung durch das Schneidewerkzeug hindurch, der Heizleiter in die vorgenannte Spiralnut eingelegt und das aufgeworfene Material so gut wie möglich über den eingelegten Draht gedrückt. Die Schriften beschreiben ähnliche Verfahren, wobei sich das Endresultat wenig von der in dem oben erwähnten Schweizer Patent CH 515449, gemäss Fig 4 beschriebenen Variante unterscheidet. Es wird sogar der bekannte Nachteil in Kauf genommen, dass ein wesentlicher Anteil der blanken Heizleiteroberfläche mindestens in der Anfangsphase des Schweissvorgangs offen an der Umgebungsluft liegt, womit diese Partie der Wärmeaustauschfläche nur mittelbar, nach der Auffüllung der Freiräume zwischen Muffenkörper und den zu verschweissenden Rohrenden aktiv an der Bildung von Schmelze beteiligt ist. Weiter wirkt sich negativ aus, dass bis zum Zeitpunkt der vollständigen Schmelze-Einbettung des Heizleiters, dessen luftisolierter Oberflächenanteil unkontrolliert hohe Temperaturen erreichen kann. Zudem besteht in diesem Zeitraum ein erhebliches Risiko der Blasenbildung durch von Schmelzeanteilen eingekapselter Luft, die aus Hohlräumen längs der Spiralbahn des Heizleiters nicht kontinuierlich und gleichmässig nach aussen verdrängt wurde.

Die bei der Energieübertragung auftretenden Mängel der vorgängig diskutierten Verfahrensweise zum Einbringen des Heizleiters in einen Muffenkörper, versucht bspw. das im Europäischen Patent EP 0119738 angegebene Verfahren mit einer grundsätzlich anderen Rillenbildung zu verbessern. Es werden hier die elastischen Eigenschaften des Muffenmaterials ausgenützt, indem Kunststoffmaterial verdrängt, der Draht in die so gebildete aufgespannte Nut eingelegt, die Verdrängung entlastet und der Draht dadurch so gut wie möglich eingeklemmt und damit gehalten wird. Nachteilige Wirkung hat jedoch der durch das Aufpflügen der Oberfläche bedingte, plastisch verformte dicke Materialwulst, der abschliessend teilweise oder ganz über den Heizleiter gedrückt werden muss. Hier wird durch den schräggestellten Einschnitt der Heizleiterdraht wohl besser umfasst, vorausgesetzt dass die Nute genügend tief geschnitten wird, der tiefe Einschnitt hat aber zwangsläufig zur Folge, dass der Heizleiter relativ tief in den Muffenkörper zu liegen kommt, was die Schweisseigenschaften der Elektroschweissmuffe negativ beeinflusst. Wird, um diesen Nachteil zu beseitigen, die Nute dagegen nur minimal tief geschnitten, so besteht die Gefahr, dass der Heizleiter wegen der zu geringen Verdrängung und Rückwirkungskräften während dem Wickelvorgang teilweise wieder aus der Spiralnute schlüpft, was zu unbrauchbaren Ausschussteilen führt. Beim Ueberdecken des Drahtes, bildet sich durch Andrücken des aufgepflügten Randes entlang der Einlegelinie ein spiralförmiger Wulst, der zu Lunkerbildung in der Fügezone zwischen Muffe und Rohr beitragen kann.

Die auf den ersten Blick vorteilhaft erscheinende Methode des Einpflügens des Heizleiters durch Einschneiden der Oberfläche, Einlegen und durch die Rückstellkräfte Einklemmen desselben, hat den grundsätzlich gravierenden Nachteil, dass mit dem eingelegten Heizleiter der entsprechende Volumenanteil des thermoplastischen Materials nicht entfernt sondern nur bedingt kontrollierbar verdrängt bzw. verlagert wird und dann in Form von Rillen-und Wulstanteilen in der Fügefläche störend zurückbleibt. Die dadurch bewirkten Nachteile bei der Verschweissung zweier Flächen sind oben schon erwähnt worden.

Wie bei den vorgängig beschriebenen Wickelmethoden, steht der Draht auch im schrägen Einschnitt unter Zug, was latente Radialkräfte bewirkt. Steigt nun örtlich oder in einem gewissen Bereich diese radiale Kraftkomponente über die zurückhaltenden Reibkräfte an, so wird der Heizleiterdraht soweit in der Spiralnute radial nach innen rutschen, bis das Kräftegleichgewicht wieder hergestellt ist. Mit welchem Abstand der Heizleiterdraht dann gegenüber der Bohrungsoberfläche im Muffenkörper schliesslich zu liegen kommt, ist nicht genau vorbestimmbar.

Zumindest während der Einlegeoperation wird der Draht im wesentlichen durch mechanische Reibung zwischen dem Muffenmaterial und dem Heizleitermaterial im Muffenkörper festgehalten, was wegen der generell kleinen Reibungszahl zwischen Thermoplast und Metalldraht nur mit grossen Klernmkräften einigermassen sicher funktioniert. Diese Rahmenbedingung wiederum kann zu hoher Zugbelastung im Heizleiterdraht führen. Dadurch kann z. B. ein dünner und weicher Kupferdraht bleibend verstreckt werden, was zwangsläufig den Ohm'schen Widerstand der Heizwicklung unkontrollierbar erhöht und bei der Vorgabe von funktionsgerechten, engen Fertigungstoleranzen ebenfalls kostspieligen Ausschuss ergibt.

Eine generelle Problematik besteht beim Einlegen des Heizleiterdrahtes mit simultaner Ausführung mit dem Nutenschneiden darin, dass je nach konstruktiver Gestaltung der Drahtdurchführung durch das Schneidewerkzeug ein erhebliches Störungsrisiko wegen Werkzeugbruch und/oder Verklemmen des Heizleiterdrahtes besteht. Entweder nimmt man bei genügender Wandstärke des Schneidwerkzeuges um die Drahtdurchführung eine zu grosse Aufweitung der Einlegenut in Kauf, wie in den Figuren 1a,b,c mit gestrichelten Kreisen veranschaulicht, oder man vermeidet dies durch möglichst dünne Wandstärken und riskiert einen Werkzeugbruch. Hier kann man nur einen Kompromiss schliessen, statt mit optimaler Verarbeitungsgeschwindigkeit die Einbettung vorzubereiten, um dann unter optimalen Umständen und mit einem für den Einbettungsvorgang optimierten Werkzeug den Heizdraht einzubetten, wodurch weniger Reibung und weniger Umgebungsschäden entstehen, ist man gezwungen, buchstäblich "zwischendurch zu fahren". So wird bspw. auch die Maschinengeschwindigkeit, um Produktionsstörungen zu minimieren, entsprechend langsam gewählt, was die bei diesen Verfahren bisher angenommene Wirtschaftlichkeit einer Zusammenlegung der beiden Verfahrensschritte "Spiralnute schneiden" und "Heizleiterdraht einlegen" im Gegensatz zum Durchführen dieser Verfahrensschritte in Einzeloperationen in Frage stellt.

Erwünscht wäre ein Verfahren zur Herstellung von elektrisch schweissbaren Zonen, welche die eingangs genannten Bedingungen erfüllen. Das Verfahren soll deswegen aber nicht zu einer Verteuerung des Produktes führen.

Mit der in den Patentansprüchen definierten Erfindung können elektrisch schweissbare Oberflächen für Fittings wie Elektro-Schweissmuffen, Elektro-Schweissringe und dergleichen Produkte hergestellt werden, was natürlich auch ebene Flächen beinhaltet.

Anhand der nachfolgend aufgeführten Figuren wird ein Beispiel des erfindungsgemässen Vorgehens zum Einbringen des Heizleiterdrahtes in einen aus thermoplastischen Material bestehenden Körper, bspw. eine Elektroschweissmuffe mit drei möglichen Spiralnutenformen, die durch aneinandergereihte, erfindungsgemässe Verfahrensschritte erstellt werden, im Detail diskutiert. Das Einlegen in andere, beliebig geformte Flächen erfolgt in analoger Weise.
- Fig.1a: zeigt im Schnitt einen Teil einer bekannten Spiralnutenform mit angedeutetem Heizleiter beim Einlegevorgang; der Einfluss der geometrischen Form der Spiralnute auf die Kräfteverteilung ist durch Pfeile dargestellt.
- Fig.1b: zeigt eine andere bekannte Spiralnutenform mit angedeutetem Heizleiter beim Einlegevorgang.
- Fig.1c: zeigt eine weitere Spiralnutenform mit angedeutetem Heizleiter beim Einlegevorgang.
- Fig.2a: zeigt eine erste Ausführungsform der Erfindung, im Teilschnitt einer Fügepartie einen thermoplastischen Körper, bspw. ein Muffenkörper bei dem die Drahtabdeckung mit einer nicht zeichnerisch dargestellten, geradlinigen, stechbeitelförmigen Klinge symmetrisch vorgeschnitten, mittig getrennt und radial aufgestellt ist.
- Fig.2b: zeigt ein eingetieftes (E), dem gewählten Drahtdurchmesser (D) angepasstes Drahtbett, das mit einem Halbrund-Formstahl spanend bearbeitet ist.
- Fig.2c: zeigt den entsprechenden Heizleiter, der in das Drahtbett eingelegt ist, wobei anschliessend die Drahtabdeckung gegen den Heizleiter zurückgeführt und an diesen angedrückt wurde.
- Fig.2d: zeigt ein Schema der Kräfteverteilung auf den eingelegten Heizleiter beim Verfahrensschritt von Fig. 2c.
- Fig.2e: zeigt die Schnittlinien rund um das Drahtbett mit dem fertig eingebetteten Heizleiter. Mit einem nicht gezeichneten Passdorn wurde mittels kurzzeitigem Stromdurchgang durch den Heizleiter im Bereich der Schmelzezone 9 die Einlegeöffnung versiegelt, d.h. der Heizleiter befindet sich an der massgenau vorbestimmten Lage (Mass F) vollständig im Fittingmaterial eingebettet; die zur Verschweissung bereite Fügefläche präsentiert sich glatt, ohne wesentliche Rillen oder Kämme.
- Fig.3a: zeigt eine Draht-Abdeckung, die mit symmetrisch trennender, profilierter Stechbeitelklinge vorgeschnitten und radial aufgestellt ist.
- Fig.3b bis Fig.3e: zeigen analoge Operationsschritte wie Fig.2b bis Fig.2e.
- Fig.4a: zeigt eine Draht-Abdeckung, die mit geradliniger, asymetrisch, also einlippig trennender Stechbeitelklinge vorgeschnitten und radial aufgestellt ist.
- Fig.4b bis Fig.4e: zeigen analoge Operationsschritte wie Fig.2b bis Fig.2e.
- Fig.5a und 5b: zeigen ein Werkzeug zur Vorbereitung eines Unterniveau-Drahtbettbodens mit Abdeckung gemäss allgemeinem Verfahrensschritt II, hier kombiniert als Stechbeitel-Schneidwerkzeug und Drahtbett-Spanwerkzeug.
- Fig.6a und 6b: zeigen ein Werkzeug zum Einlegen des Heizleiters und anschliessendem Anpressen der Abdeckung gemäss allgemeinem Verfahrensschritt III.
- Fig.7a bis 7e: zeigen eine Variante, bei welcher der Unterniveau-Drahtbettboden tiefer als das Drahtbett gelegt ist und das Drahtbett in die Abdeckung über dem Drahtbettboden eingearbeitet ist.

Die Figuren Fig.1a bis Fig.1c zeigen bekannte Ausführungsbeispiele von Spiralnutenformen mit angedeutetem Heizleiter während des Einlegevorgangs. Der Einfluss der geometrischen Form der Spiralnute auf die Kräfteverteilung ist durch Pfeile dargestellt. Diese drei Figuren sollen einführungsmässig den Problemkreis aufzeigen, der durch die hier vorgestellte Erfindung erfolgreich umgangen wird.

Die in Figur 1a im Längsschnitt durch den Muffenkörper dargestellte Spiralnute stellt ein klassisches Beispiel einer Nutgeometrie dar, die durch spanabhebende Bearbeitung erzeugt wurde. Der Heizleiterdraht wird unter mässiger Zugspannung mit Hilfe von einer nicht dargestellten rollenden oder gleitenden Drahtführungs- und Einlegevorrichtung in die für den verwendeten Draht etwas zu eng geschnittene Spiralnute kontinuierlich eingepresst. Die seitlich auf den Heizleiter wirkenden Klemmkräfte K1 und K2 bewirken die Reibkräfte R1 und R2 welche der radialen Kraftkomponente Z, hervorgerufen durch die Zugspannung des Drahtes, entgegenwirken. Sind die Klemmkräfte entlang des eingelegten Heizleiterdrahtes genügend gross und die Auslenkkraft am Draht während dem Einlegevorgang verhältnismässig klein, so sind die Bedingungen für eine sichere Positionierung der Drahtwicklung im Muffenkörper gegeben. Das massgebende Kriterium ist die Zuordnung von Drahtdurchmesser D und Nutweite N mit Berücksichtigung der fabrikationstechnischen Masstoleranzen.

Wird die Nute nicht spanabhebend eingearbeitet sondern nur aufgeweitet, so ist die Nutbreite wesentlich grösser als der Drahtdurchmesser, was durch einen gestrichelten Kreis dargestellt ist. Es ist dann schwierig, den Heizdraht so tief in den Spalt einzubringen, dass er dort eingeklemmt und gehalten wird.

Ein weiteres Vorgehen zur Herstellung von Spiralnuten ist das partielle Zerspanen und Pflügen im gleichen Arbeitsgang; eine so entstandene Rillenform ist in Figur 1b dargestellt. Bemerkenswert ist hier der, durch die Verdrängungswirkung des entsprechend geformten Schneidwerkzeuges, beidseitig der offenen Rille aufgeworfene Materialwulst. Mit einem speziell ausgebildeten Drahtführungs- und Glättewerkzeug können nun beim Einlegen des Heizleiterdrahtes diese wulstartigen Materialpartien so gegen den Draht gedrückt werden, dass der Draht mindestens teilweise überdeckt wird, womit im weiteren Verlauf der Fertigung zusätzlich zu den, wie für Figur 1a beschriebenen Reibkräften, die Verengung der Rillenöffnung ein Herausschlüpfen des Heizleiterdrahtes erschwert.

Bei der in Figur 1c dargestellten Rille ist das Hauptaugenmerk auf die Ausbildung eines in die Muffeninnenfläche hineinragenden Lappens gelegt, welcher anschliessend an den Drahteinlegevorgang zur vollständigen Ueberdekkung des Heizleiters verwendet wird. Bis zum Zeitpunkt, wo der erwähnte Lappen nach einem speziellen Arbeitsschritt durch Wärmezufuhr durch den Heizleiterdraht teilweise mit dem Muffenmaterial verschweisst ist, besteht speziell während des Einlegevorgangs eine labile Situation bezüglich der Position des Heizleiterdrahtes in der noch offenen Rille. Die radiale Kraftkomponente Z, der am Draht wirkenden Zugkraft wird durch die schräggestellte Auflagefläche in das Kraftkomponentenpaar Z1 und Z2 aufgeteilt. Die infolge Z2 wirkende Reibkraft Rz2 ist naturgemäss immer kleiner als Z1. Um ein Kräftegleichgewicht zu erreichen, sind, wie bei Figur 1a beschrieben, zusätzliche, durch Klemmwirkung zwischen Nute und Draht erzeugte Reibkräfte nötig. Bei dieser Methode ist darauf zu achten, dass die Klemmwirkung durch die Kraftkomponente Z2 reduziert wird. Die Position des Heizleiterdrahtes ist erst bestimmt, wenn die Summe von R1, R2 und Rz2 grösser als Z1 wird. Da das ganze Kräftesystem durch die Zugkomponente Z1 beeinflusst wird, ist es verständlich, dass der Produktionsablauf mit dieser Form der Nutengeometrie nicht leicht stabil zu halten ist.

Die vorliegende Erfindung hat, wie schon gesagt, zum Ziel, diese aufgezählten Nachteile der bekannten Fabrikationsmethoden zu eliminieren und sämtliche Kriterien der eingangs aufgezählten Anforderungen für eine sichere elektroschweissbare Verbindung zu erfüllen.

Die allgemeine Lösungsidee besteht in der Schaffung eines definierten Unterniveau-Drahtbettes und im Detail darin, die Drahtnute geometrisch so zu gestalten, dass der eingelegte Heizleiterdraht beim Einlegevorgang in masslich vorbestimmter Lage, mit geringem Abstand zur vorbestimmten Fügefläche, vollumfänglich im Material des Muffenkörpers eingebettet und so positiv gehalten ist. Dies wird durch einen Schneid-/Zerspanvorgang durchgeführt, mittels welchem eine tiefendefinierte Abdeckzone durch Bildung eine Unterniveau-Drahtbettbodens und eine auf den verwendeten Drahtdurchmesser abgestimmte Einbettzone geschaffen werden. In die Einbettzone wird der Heizleiterdraht formpassend eingelegt, die Abdeckzone erlaubt ein luftfreies Verschliessen mit einer Decke von definierter Dicke. Dadurch kann ein Heizleiterdraht völlig luftfrei in gleichbleibender Einbettungstiefe verlegt werden.

Durch den Einsatz eines frei programmierbaren, rechnergestützten Bearbeitungszentrums sollen die einzelnen Operationsschritte zugunsten optimaler Maschinengeschwindigkeiten und optimaler Werkzeugausgestaltungen teilweise oder ganz separiert, aneinandergereiht ausgeführt werden.

Am Beispiel einer Schweissmuffe mit Spiralanordnung des Heizleiters empfiehlt es sich, die vorgängigen Bearbeitungsoperationen, das Drahteinlegen, das Zurückbiegen und Andrücken der Draht-Abdeckung auf einer handelsüblichen CNC-Drehmaschine mit Werkzeugwechsel-Automatik und teilweise erweiterten Software-Funktionen in einer Werkstückaufspannung durchzuführen.

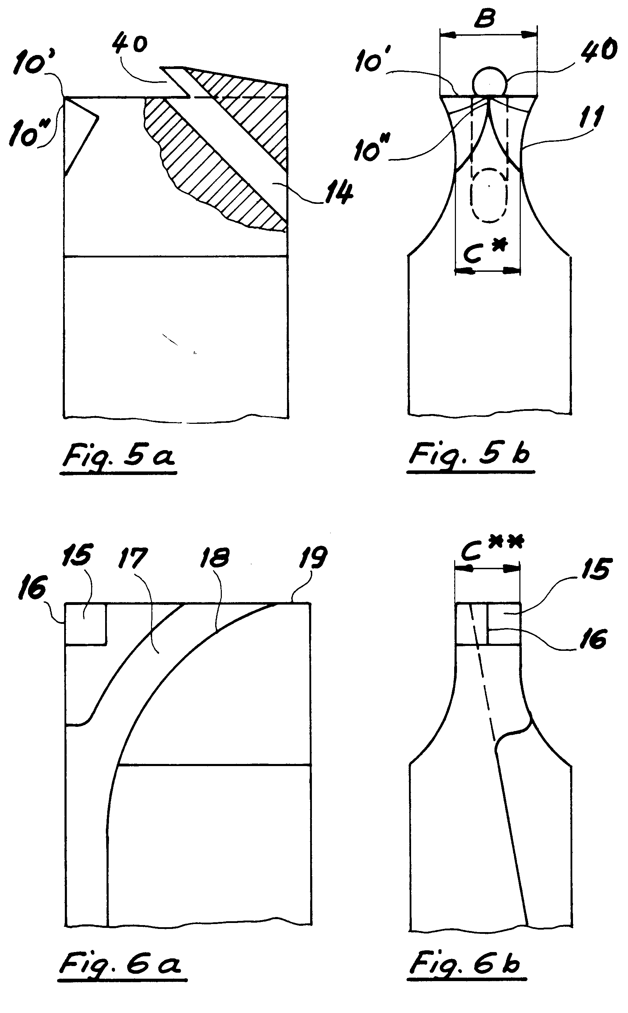

Die Operationsschritte gemäss den Figuren Xa, Xb können einzeln hintereinander mit entsprechenden getrennten Werkzeugen (Stechbeitel und spanabhebendes Werkzeug) oder simultan mit einem kombinierten Spezialwerkzeug (wie es in Figur 5 dargestellt ist) ausgeführt werden. Das Drahteinlegen, Zurückbiegen und Andrücken der Draht-Abdeckung gemäss den Figuren Xc und Xd kommt mit Hilfe eines anderen kombinierten Spezialwerkzeuges zur Ausführung. Die sichere Positionierung des Heizleiters nach der Versiegelung gemäss Figur Xe ist damit gewährleistet. Für den Siegel- und Glättevorgang der Fügefläche wird, als Teil der Konfektionierungsstrasse, eine weitere Spezialvorrichtung eingesetzt.

Beschreibung der gemeinsamen Schritte I-V des Verfahrens am Beispiel einer Schweissmuffe:
I: **Vorbereitung der Fügefläche**. Der im Spritzgiessverfahren oder als extrudiertes Rohrstück hergestellte Rohling, hier ein Muffenrohling, wird, nach Ablauf der je nach verwendetem Thermoplast notwendigen Nachschwindungszeit dem Zwischenlager entnommen. Alle Bearbeitungsoperartionen erfolgen auf einer CNC-Drehmaschine. Die Innenpartie des Rohlings wird nun spanabhebend bearbeitet.
II: **Einarbeiten des Drahtbettes**. In die nun rundlaufende und massgenaue Bohrung wird mit Hilfe eines Drehstahls, der eine stechbeitelartige Klinge sowie eine quergestellte Trennschneide aufweist, der in Figur Xa dargestellte Unterniveau-Drahtbettboden mit der Draht-Abdeckung vorbereitet. Entsprechend der Schichtdicke A wird die Klingenbreite B so gewählt, dass der gewünschte Abstand C zwischen den geöffneten Abdeckungspartien, ohne störende Deformation derselben, eingehalten werden kann. Entsprechend dem vorgegebenen Drahtabstand in den beiden künftigen Schweisszonen sowie der zur Abgrenzung derselben vorgesehenen Mittelpartie wird die jeweils günstigste Steigung mit möglichst sanftem Uebergang von einem Steigungswert zum andern programmiert. Simultan, mittels eines kombinierten Spezialwerkzeuges oder als zusätzlicher Schritt wird nun, mit identischem Steigungsprogramm, ohne die geöffnete Draht-Abdeckung zu verletzen, das profilierte Drahtnest oder Drahtbett spanend in den Unterniveau-Drahtbettboden eingearbeitet. Damit ist die Muffe zum Einlegen des Heizleiters vorbereitet. Es empfiehlt sich, den Drahtbettboden mit Abdeckung und das Drahtbett mit dem in Figur 5 gezeigten Spezialwerkzeug in einem Arbeitsgang herzustellen.
III: **Einlegen des Heizleiters.** Mit Hilfe eines profilierten Drahtführungs-und Einlegefingers, kombiniert mit einem Anpress-Schuh mit Führungs- und Biegepartie für das Rückstellen und Positionieren der Draht-Abdeckung wird der Heizleiter zwischen die, nahe an den zwei Stirnflächen des Muffenkörpers, für die Aufnahme der Kontaktelemente vorgesehenen Bohrungen in das spiralförmig durchlaufende Drahtbett eingebracht. Dazu verwendet man die gleichen Steigungsparameter, die man für die Bildung des Drahtbettes verwendete. In der Regel findet lediglich ein Werkzeugwechsel und eine vorprogrammierte Parameteranpassung statt. Wie gesagt, läuft dieser Vorgang getrennt vom Bilden des Unterniveau-Drahtbettes ab. Man hat hier die Möglichkeit, die Geschwindigkeit für das Einlegen exakt den Eigenschaften des einzulegenden Heizleiters bezüglich Drahtbelastung anzupassen.
IV: **Anbringen der Anschlusskontakte**. Das Glätten der Fügefläche kann durch Aufheizen des eingelegten Heizleiters geschehen. Bevor jedoch die zusammengedrückten Stösse der Abdeckung zusammengeschmolzen werden können, müssen, weil man die Eigenheizleistung des eingelegten Heizleiters verwendet, die freien Enden des Heizleiter-Wendels mit den, auch für die spätere Verschweissung verwendbaren Kontaktelementen versehen werden.
V: **Schliessen und Glätten der Fügefläche**. Die so vorbereitete Schweissmuffe wird in eine Presse eingelegt und zugleich über die Kontaktelemente an eine geeignete Stromquelle angeschlossen. Ein kühlbarer Passdorn wird in die mit dem Heizwendel versehene Muffenbohrung eingeschoben, wobei die spiralförmig über dem Heizleiter verlaufende Deckschicht gegen die Wandung des Muffenkörpers und gegen den eingelegten Heizleiter gedrückt wird. In diesem Zustand wird nun kurzzeitig soviel elektrische Energie durch den Heizleiter geschickt, dass die, vom Passdorn mechanisch satt geschlossenen Schnittlinien verschmolzen werden. Auf dem nun mit Kühlmedium durchflossenen Passdorn verfestigt sich die geglättete Innenoberfläche zur massgenauen Bohrung der fertigen Schweissmuffe. Das Verfahren ist in analoger Weise auch für Schweissringe mit Aussenwicklung anwendbar, oder aber für andere beliebige Flächen, insbesondere Ebenen, bei denen eine mit Kühlmedium durchflossene Pressplatte verwendet wird. Als weitere, unabhängige Konfektionierungsoperationen werden der Schweissindikator und allenfalls der zentrale Rohranschlagring montiert.

Die einzelnen Ausführungsformen bezüglich ihrer Formgebung:

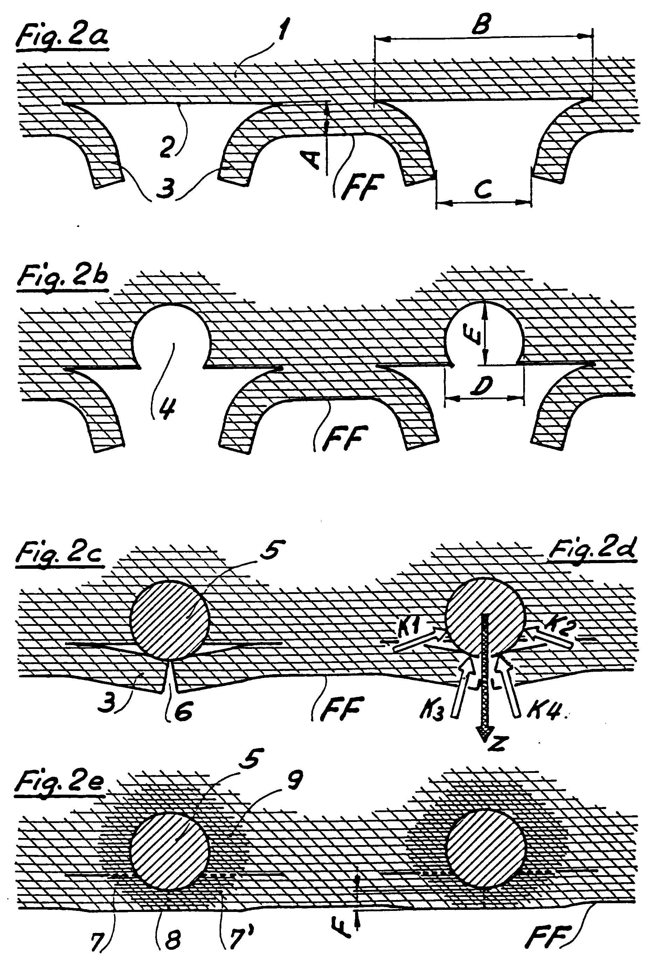

Die Figuren 2a-e zeigen eine Ausführungsform, bei der die Drahtabdeckung symmetrisch zum Heizleiter angelegt ist.

Gemäss Figur 2a wird in den vorbereiteten, glatt bearbeiteten Thermoplastkörper 1 die Draht-Abdeckung 3 mit einer in Figur 5 dargestellten geradlinigen, stechbeitelförmigen Klinge symmetrisch vorgeschnitten, mittig getrennt und von der Fügefläche FF wegweisend aufgebogen. Auf diese Weise entsteht, was völlig neu ist, in einem exakt definierten Tiefenniveau A ein mit den ausgeschnittenen Abdeckung 3 abdeckbarer, hier ebener, Unterniveau-Drahtbettboden 2 von einer definierten Breite B. Die Deckleisten 3 können durch Formgebung des Stechbeitelhalses gereckt, gestaucht, plastisch verformt und für die Drahteinlegung offengestellt werden, wie das bspw. mit einem Abstand C dargestellt ist, was jeweils der Art und Weise der nachträglichen Abdeckung dienlich ist.

Figur 2b zeigt, wie nun in die abdeckbare Drahtbettebene 2 das Drahtbett 4 mit einem Halbrund-Formstahl spanend eingearbeitet wird. Hier besteht nun die Möglichkeit, das Drahtbett genau dem Heizleiter anzupassen und mit dem Werkzeug ein Drahtbett mit dem Durchmesser D des Heizleiters zu schaffen. Die Drahtbett-Tiefe E bestimmt die für das Einlegen des Drahtes nötige Klemmwirkung, die durch die spanende Bearbeitung sehr genau einstellbar ist.

Im nächsten Schritt, wie ihn Figur 2c zeigt, ist der Heizleiter 5 durch die mit dem Abstand C offenstehenden Deckleisten 3 in das Drahtbett 4 eingelegt worden und die Deckleisten 3 anschliessend gegen den Heizleiter 5 zurückgebogen und angedrückt worden. Wie dann die noch zu verschliessende Oeffnung 6 der (stumpf) aufeinander stossenden Abdeckung aussieht, kann mit der Ausgestaltung des Stechbeitelhalses weitgehend gesteuert werden. Es hat sich gezeigt, dass beim Einschneiden und Oeffnen eine leichte Reckung der Deckleisten 3 derart, dass sie im Schnitt eine gegen aussen leicht keulenförmige Ausweitung aufweisen, einerseits das Drahtbett beim Drahteinlegen leicht zugänglich ist und andererseits die Verschlusszone 6 begünstigt wird. Schliesslich ist in Figur 2d das Schema der ungefähren Kräfteverteilung auf den eingelegten Heizleiter dargestellt, wie dies in den Figuren 1x zum Stand der Technik ebenfalls gezeigt wurde. Man sieht hier den wesentlich wirksameren Ansatz der Klemmkräfte K1/K2 im Drahtbett und den fast idealen Kraftverlauf der Haltekräfte K3/K4 durch die Deckleisten 3, deren Kraftkomponente gegen die Z-Richtung sehr gross ist. Schon hier ist ein erster fabrikationstechnischer Vorteil feststellbar; der Draht kann während des Einlegens praktisch nicht mehr aus seiner gegebenen Lage herausschlüpfen. Der mit dem Heizleiter bestückte Teil kann nun ohne Ausschuss dem nächsten Verarbeitungsschritt zugeführt werden.

Figur 2e zeigt den Zustand der Muffe nach dem Schmelz-Verankern oder Versiegeln des Heizleiters im Muffenkörper. Die Schnittlinien 7,7',8, also die Drahtbettebene 2 und die Oeffnung 6, rund um das Drahtnest 4 mit dem eingelegten Draht 5, wurden auf einem hier nicht dargestellten Passdorn mittels kurzzeitigem Stromdurchgang durch den Heizleiter 5 im Bereich der Schmelzezone 9 versiegelt, d.h. der Heizleiter befindet sich an der massgenau vorbestimmten Lage (Mass F) vollständig im Fittingmaterial eingebettet; die Innenoberfläche der Schweissmuffe präsentiert sich glatt, ohne wesentliche Rillen oder Kämme.

Damit sind die eingangs aufgeführten Forderungen erfüllt: Der Heizleiter liegt mit masslich festgelegtem, wunschweise möglichst geringem Abstand zur Fügefläche im Fittingkörper, er ist ohne störende Lufteinschlüsse vom Fittingmaterial vollständig umhüllt, die Fügefläche weist nach dem Einbringen des Heizleiters eine glatte, gleichmässige Oberfläche auf. Rillen und wulstförmige Kämme die durch zusätzliche isolierende Luftschichten zwischen den zu verschweissenden Oberflächen den Aufschmelzvorgang stören und überdies ein erhebliches Risiko von Lufteinschlüssen (Lunker) beim Schweissvorgang bilden, sind nicht vorhanden.

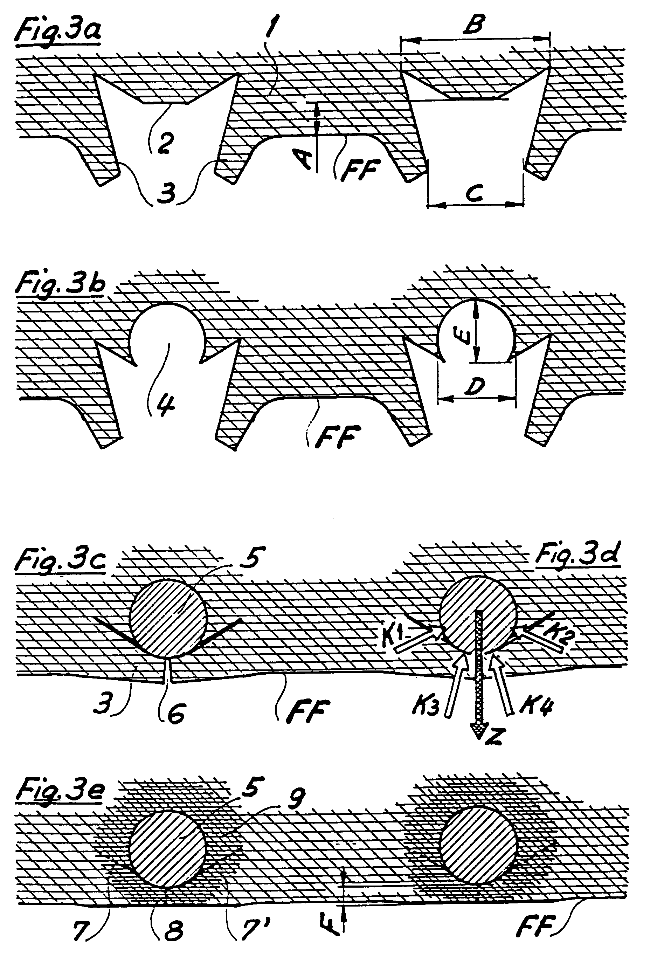

Die Figuren 3a-e zeigen eine Ausführungsform, bei der der innere Drahtbettboden 2 konvex ausgestaltet ist. Mit dieser Massnahme lässt sich einerseits die Klemmwirkung beim Einlegen des Heizleiters variieren und andererseits Form und Detailfunktion der Abdeckung 3 verändern. Man sieht hier, was für Möglichkeiten der Variation die hier diskutierte Erfindung bietet. An dieser Stelle seien aus einer grösseren Anzahl Möglichkeiten deren drei, also in der Folge noch zwei weitere dargestellt.

Der Unterniveau-Drahtbettboden mit der Drahtabdeckung wird auch hier wieder mit einer symmetrisch trennenden und profilierten Stechbeitelklinge vorgeschnitten und, eine Einlegeöffnung bildend, radial aufgebogen. Die weiteren Verfahrensschritte nach den Figuren 3b-e sind analoge Operationsschritte, wie dies im Zusammenhang mit den Figuren 2b-e im Detail diskutiert wurde.

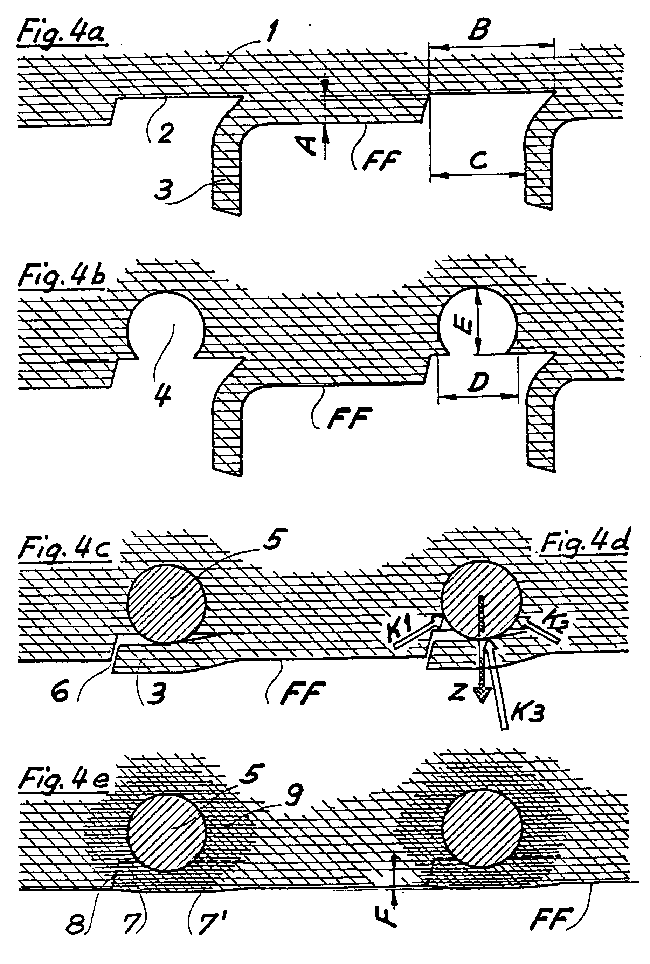

Die Figuren 4a-e zeigen eine Ausführungsform, bei der die Drahtabdeckung mit einer geradlinig-asymetrisch trennenden Stechbeitelklinge vorgeschnitten und von der Fügefläche FF wegweisen aufgebogen wurde. Der unter der Fügefläche liegende Drahtbettboden ist wieder eben ausgestaltet, jedoch erhält man bei diesem Schnitt statt zwei gleich grosse Deckleisten eine fast doppelt so grosse Einzeldeckleiste 3. Diese Ausführungsform hat Vorteile, wenn man bspw. mit einem Drahteinlegewerkzeug arbeitet, das "schräg" einlegt, wodurch bei einer symmetrischen Vorbereitung der Drahteinlegeabdekkung eine Abdeckung im Weg wäre. Auch hier sieht man die enorme fabrikationstechnische Variationsmöglichkeit der erfinderischen Lehre. Die weiteren Verfahrensschritte nach den Figuren 3b-e sind analoge Operationsschritte, wie dies im Zusammenhang mit den Figuren 2b-e im Detail diskutiert wurde.

Figur 5a,b zeigt ein spezielles stechbeitelähnliches Werkzeug zur Herstellung von Unterniveau-Drahtbetten mit kombinierter Schneid- und Zerspan-Fähigkeit. Mit diesem Werkzeug kann das erfindungsgemässe Drahtbett in einem Arbeitsgang hergestellt werden. Die zwei Figuren zeigen das Werkzeug teilweise angeschnitten von der Seite (5a) und von vorne (5b). Man erkennt insbesondere in Figur 5b die im vorderen Teil gezeigte Stechbeitelform mit zwei aufeinanderstehenden, einander angeformten Schneiden 10',10'' zum Schneiden des Unterniveau-Drahtbettbodens von der Breite B, den aus den Schneiden verlaufenden, geschwungenen Ansatz 11 zum Aufbiegen der Deckleisten auf einen Abstand C^{*} und den Ansatz 40 zum spanabhebenden Bilden des Drahtbetts 4. Figur 5a zeigt den Kanal 14, durch welchen der ausgeschnittene Span geführt wird. Mit der Formgebung des Ansatzes 11 steuert man einerseits das bleibende Aufbiegen der Abdeckung 3 durch plastische Verformung und andererseits den Grad der plastischen Verformung der Abdeckung 3, was wiederum einen Einfluss auf die Verschlussnarbe an der Oberfläche (also Fügefläche FF) des mit dem Heizleiter 5 bestückten Teils hat.

Die Figuren 6a,b zeigen in Anlehnung an die Figuren 5a,b ein Werkzeug zum Einlegen des Heizleiters. Die hauptsächliche Problematik beim Einlegen des Heizleiters liegt in der Drahtführung, welche beim simultanen Schneiden einer wie auch immer gearteten Drahtgrube und gleichzeitigem Einlegen des Drahtes in diese wegen schädlich kleinen Biegeradien stets suboptimal ausfällt. Dieser Nachteil wird mit der hier diskutierten Erfindung der Unterniveau-Drahtbettboden-Technik elegant behoben; der Heizleiter kann ohne belastend kleine Radien optimal gleitend in das vorbereitete Drahtbett eingelegt werden.

Figur 6a zeigt das Einlegewerkzeug in seitlicher Position mit einem Biegekeil, der eine Schar 16 und Biegeflächen 15 zum Aufbiegen der Abdeckung 3 aufweist, und mit einer vorzugsweise offenen Drahtführung 17, in welche der Draht eingelegt wird. Der Heizleiter wird entlang der sanft gerundeten Führungsfläche 18 geführt und tritt unter dem Anpressnocken 19 aus, der sich sukzessive über eine hier nicht mehr dargestellte Fläche auf die Breite D verjüngt. Der Partie 19 folgend angeordnet ist ein hier nicht dargestellter Rückbiege- und Glätteschuh für die Rückplazierung der Abdeckung 3. In Figur 6b erkennt man den Biegekeil von vorne, wobei beide Biegeflächen 15 beidseitig der Schar 16 sichtbar sind. Die Breite C** des Biegekeils ist gleich oder kleiner der Aufbiegeweite C* gemäss Figur 5b. Ausserdem erkennt man in Figur 6b die seitlich offene Drahtführung 17, in welche man den Heizleiter einlegen kann, nicht einfädeln muss. Der Einlegevorgang ist gegenüber einem Einfädelvorgang leicht zu automatisieren. Allenfalls kann noch ein manipulierbares Rückhaltemittel für den Draht vorgesehen werden, um einem möglichen Herausfallen aus der Führung vorzubeugen.

Eine Abwandlung des erfindungsgemässen Vorgehens zeigen die Figuren 7a bis 7e. Dabei wird ein Unterniveau-Drahtbettboden herausgearbeitet, auf den das Drahtbett aufgelegt wird. Diese Variante kann bei speziellen Materialien von Vorteil sein.

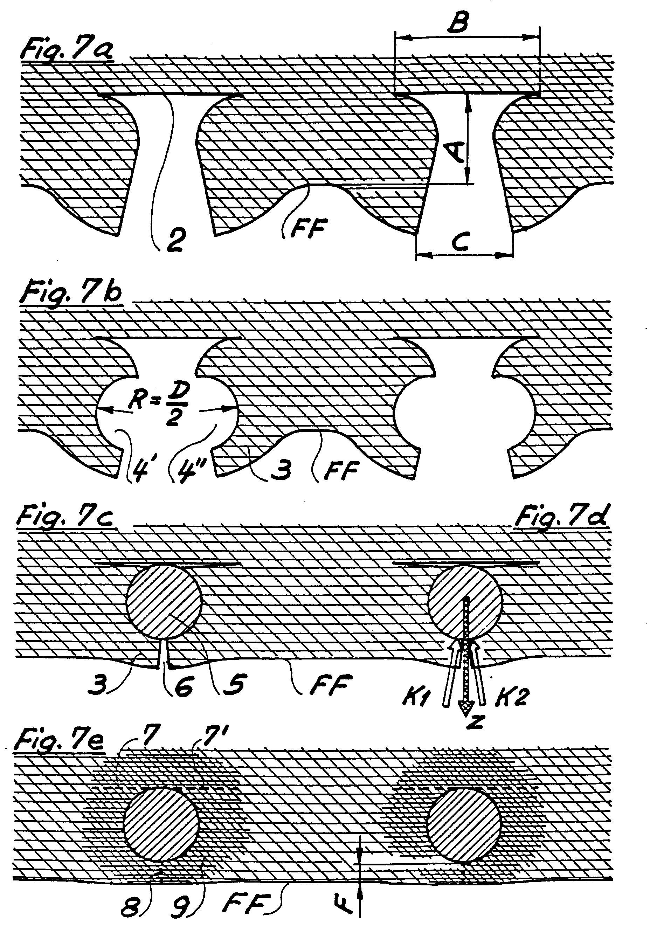

Figur 7a zeigt die Vorbereitung des Drahtbettbodens 2, wobei die Tiefe A vom Durchmesser des Heizleiters abhängig ist. Die Abdeckung 3 wird soweit aufgebogen, Abstand C, dass das Drahtbett in die Stösse der Abdeckung eingearbeitet werden kann. Dies zeigt Figur 7b. Die Radien oder Halbdurchmesser bilden zwei Drahtbetthälften 4' und 4'', die zusammen den Durchmesser des Heizleiters umschliessen. Nach dem Einlegen des Heizleiters 5 und dem Zusammenpressen der Öffnung 6, wie in Figuren 7c und 7d gezeigt, wird der Heizleiter 5 gegen die Zugkraft Z durch die Kraftkomponenten K1/K2 so zurückgehalten, dass er während des Einlegevorgangs im Drahtbett verbleibt. Nach dem Schmelzverankern oder Versiegeln des Heizleiters im umschliessenden thermoplastischen Material mittels Eigenheizung, ist der Heizleiter gleich eingebettet, wie in den oben gezeigten Ausführungsformen, lediglich die Schweissung der Schnittlinie des Drahtbettbodens 7,7' ist nun auf der anderen Seite des Heizleiters mit der an die Oberfläche bzw. Fügefläche FF reichenden Schweissnarbe. Der Heizleiter befindet sich an der massgenau vorbestimmten Lage (Mass F) vollständig im Material eingebettet; die Fügefläche präsentiert sich glatt, ohne wesentliche Rillen oder Kämme.

Wie am Beginn der Figurenlegende schon erwähnt worden ist, kann diese Methode der Bildung eines Distanz zur Fügefläche haltenden Unterniveau-Drahtbetts mit definierter Drahtbett-Abdeckung auch für andere thermoelektrisch schweissbare Oberflächen angewendet werden. Auch dort, wo nur partielle Schweisszonen vorgesehen sind.

Das Verfahren zur Herstellung einer thermoelektrisch schweissverbindbaren Zone in thermoplastischen Materialien ist wesentlich verbessert durch die formtreue und Iuftfreie Einbettung des Heizleiters in einer definierten Tiefe unter der Fügefläche. Dazu wird in einem ersten Verfahrensschritt ein Unterniveau-Drahtbettboden in das Material eingeschnitten, in dem mit einem geeigneten Werkzeug in der gewunschten, von der Materialoberfläche gemessenen Tiefe ein in zwei Ebenen verlaufender, im wesentlichen umgekehrt T-förmiger Einschnitt eingeschnitten und dem Oberflächenprofil folgend der Schnitt entlang der Einlegelinie des Heizleiters geführt wird, wobei durch dasselbe Werkzeug die sich bilenden Deckleisten entlang der Schnittbahn aufgehoben und gereckt werden, wodurch sich eine offene Furche mit dem Unterniveau-Drahtbettboden bildet. Vorzugsweise wird im gleichen Arbeitsgang das Drahtbett mit einem spanabhebenden Werkzeug dem Heizleiter entsprechend formtreu mitgeschnitten. In einem späteren Verfahrensschritt wird der Heizleiter durch die noch offene Furche eingelegt und die Deckleisten angepresst und schliesslich verschmolzen. Zurück bleibt eine rillenfreie, glatte Fügefläche, über die sich eine feine, kaum mehr erhöhte Schmelznarbe hinzieht.

## Patentansprüche

1. Verfahren zur Herstellung einer thermoelektrisch schweissbaren Zone in thermoplastischem Material, welche thermoelektrisch schweissbare Zone durch einen Heizleiter (5) erzeugt wird, der in ein im thermoplastischen Material eingeschnittenes Drahtbett (4) eingelegt wird, **dadurch gekennzeichnet,** dass ein Unterniveau-Drahtbettboden in das Material eingeschnitten wird, in dem mit einem geeigneten Werkzeug in der gewünschten Tiefe unterhalb der Fügefläche (FF) ein in zwei Ebenen verlaufender Einschnitt eingeschnitten und dem Oberflächenprofil folgend der Schnitt entlang der Einlegelinie eines Heizleiters (5) geführt wird, wobei durch dasselbe Werkzeug sich bildende Deckleisten (3) entlang der Schnittbahn aufgebogen werden, wodurch sich eine offene, abdeckbare Furche mit dem Unterniveau-Drahtbettboden bildet, dass in diesen Unterniveau-Drahtbettboden das Drahtbett (4) für einen nachfolgend einzubringenden Heizdraht eingearbeitet wird, und dass nach dem Einlegen des Heizdrahts die Deckleisten (3) zum Verschliessen der Furche zurückgebogen und verschmolzen werden, um eine möglichst rillen- und spaltfreie Fügefläche (FF) zu erhalten.

2. Verfahren nach Anspruch 1, **dadurch gekennzeichnet,** dass ein Unterniveau-Drahtbettboden mit in zwei Ebenen verlaufendem, im wesentlichen umgekehrt T-förmigem oder L-förmigem Einschnitt eingebracht wird.

3. Verfahren nach Anspruch 1 oder 2, **dadurch gekennzeichnet,** dass in der Tiefe unter der Oberfläche ein ebener Drahtbettboden eingeschnitten wird.

4. Verfahren nach Anspruch 1 oder 2, **dadurch gekennzeichnet,** dass in der Tiefe unter der Oberfläche ein gekrümmter oder polygon gestalteter Drahtbettboden eingeschnitten wird.

5. Verfahren nach einem der Ansprüche 1 bis 4, **dadurch gekennzeichnet,** dass das Drahtbett (4) in einem nachfolgenden Arbeitsschritt mit einem Folgewerkzeug in den vorgängig geschnittenen Unterniveau-Drahtbettbodens eingearbeitet wird.

6. Verfahren nach einem der Ansprüche 1 bis 4, **dadurch gekennzeichnet,** dass beim Bilden des Unterniveau-Drahtbettbodens gleichzeitig ein Drahtbett (4) in den Drahtbettboden eingearbeitet wird.

7. Verfahren nach einem der Ansprüche 1 bis 4, **dadurch gekennzeichnet,** dass das Drahtbett (4) zwischen Drahtbettboden und Fügefläche (FF) in die Deckleisten (3) eingearbeitet wird.

8. Verfahren nach einem der Ansprüche 5 bis 7, **dadurch gekennzeichnet,** dass das Drahtbett (4) in spanabhebender Verarbeitung unter Bildung eines Spanes ausgehoben wird, wodurch Material, das vom Heizleiter (5) verdrängt würde, vor dem Einlegen desselben weggenommen wird.

9. Verfahren nach einem der Ansprüche 1 bis 8, **dadurch gekennzeichnet,** dass ein Werkzeug verwendet wird, mit welchem nebst dem Aufbiegen und Recken der Deckleisten (3) zur Bildung einer Einlegeöffnung für den Heizleiter (5) die Deckleisten (3) plastisch verformt werden, um verschiedene Ausbildungen einer Verschlussnarbe zu erhalten.

10. Verfahren nach einem der Ansprüche 1 bis 8, **dadurch gekennzeichnet,** dass der Drahtbettschnitt einen Teil der Form oder des Profils des später einzulegenden Heizleiters (5) aufweist.

11. Verfahren nach einem der Ansprüche 5 bis 10, **dadurch gekennzeichnet,** dass in einem weiteren Verfahrensschritt der Heizleiter (5) in das vorbereitete Drahtbett (4) eingelegt und gleich anschliessend die Deckleisten (3) gegen das Drahtbett (4) gepresst werden.

12. Verfahren nach Anspruch 11, **dadurch gekennzeichnet,** dass der Heizleiter (5) in einem arbeitsmässig getrennten Verfahrensschritt in das Drahtbett (4) eingelegt wird.

13. Verfahren nach Anspruch 10 oder 11, **dadurch gekennzeichnet,** dass mittels Anpressen einer Kühlfläche und unter gleichzeitigem Erwärmen des Heizleiters (5) ein Verschmelzen der Schnittstellen zu einer Verschlussnarbe bewirkt wird, wodurch eine im wesentlichen rillenfreie und glatte Fügefläche (FF) entsteht.

14. Verfahren nach einem der Ansprüche 1 bis 13, **dadurch gekennzeichnet,** dass der Einschnitt von der Oberfläche zum Unterniveau-Drahtbettboden symmetrisch oder asymmetrisch zum darunterliegenden Drahtbett (4) geführt wird, wodurch gleich- oder verschiedengeformte Deckleisten (3) entstehen.

15. Werkzeug zur Herstellung eines Unterniveau-Drahtbettes gemäss Anspruch 1, **dadurch gekennzeichnet,** dass es in einem ersten Klingenteil zwei aufeinanderstehende, einander angeformte Schneidkanten (10',10'') aufweist, welche in eine die gebildete Deckleisten (3) öffnende Partie (11) zum gezielten Aufbiegen des eingeschnittenen Materials übergehen, und dass es in einem zweiten Klingenteil, der nicht in die Deckleisten (3) öffnende Partie (11) mündet, einen spanabhebenden Ansatz (40) mit einem Spanabführkanal (14) aufweist.

16. Werkzeug nach Anspruch 15, **dadurch gekennzeichnet,** dass es einen Folgeteil aufweist oder mit einem Folgewerkzeug zum Einlegen des Heizleiters (5) kombiniert ist, welche einen Öffnungskeil mit einer Schar (16) und Öffnungsflächen (15) und eine geschwungene Drahtführung (17) aufweist.

17. Werkzeug nach Anspruch 16, **dadurch gekennzeichnet,** dass die geschwungene Drahtführung (17) entlang ihrem Verlauf einseitig offen ist, allenfalls Rückhaltermittel für den Draht aufweist.

18. Gegenstand mit einer Schweissverbindung, die ein Drahtbett (4) gemäss dem Verfahren nach einem der Ansprüche 1 bis 14 aufweist, wobei die Fügefläche (FF) glatt und rillenfrei ist und eine sich nicht oder nur unwesentlich über die Fügefläche (FF) erhebende, entlang der Einlegelinie des Heizleiters (5) verlaufende Schmelznarbe (8) aufweist.

19. Gegenstand nach Anspruch 18, **dadurch gekennzeichnet,** dass im Bereich des Heizleiters (5) eine der Unterniveau-Drahtbettfläche entsprechende Schmelznarbe (7,7') sichtbar gemacht werden kann.

20. Gegenstand nach Anspruch 18 oder 19, **dadurch gekennzeichnet,** dass der Gegenstand eine Elektroschweissmuffe ist und die Schmelznarbe (8) sich spiralförmig über die Fügefläche (FF) bzw. entlang dem Unternivreau-Drahtbett-Verlauf hinzieht.

## Claims

1. Process for producing a thermoelectrically weldable area in thermoplastic material, said thermoelectrically weldable area being produced by a heater (5), which is inserted in a wire bed (4) cut in the thermoplastic material, characterized in that a sublevel wire bed base is cut in the material, in that by using a suitable tool a cut is made with the desired depth in two planes below the joining face (FF) and following the surface profile the cut is guided along the insertion line of a heater (5) and cover strips (3) formed by the same tool are bent up along the cutting path, so that an open, coverable channel is formed with the sublevel wire bed base, that in the latter is incorporated the wire bed for a heating wire to be subsequently introduced and that following the insertion of the heating wire the cover strips (3) are bent back and melted for closing the channel in order to give a groove-free and gap-free joining face (FF).

2. Process according to claim 1, characterized in that a sublevel wire bed base with a substantially inverted T-shaped or L-shaped cut running in two planes is introduced.

3. Process according to claim 1 or 2, characterized in that a planar wire bed base is cut in the depth below the surface.

4. Process according to claim 1 or 2, characterized in that a curved or polygonal wire bed base is cut in the depth below the surface.

5. Process according to one of the claims 1 to 4, characterized in that the wire bed (4) is introduced in a following working step with a follow-up tool in the previously cut sublevel wire bed base.

6. Process according to one of the claims 1 to 4, characterized in that during the forming of the sublevel wire bed base, simultaneously a wire bed (4) is incorporated into the wire bed base.

7. Process according to one of the claims 1 to 4, characterized in that the wire bed (4) is incorporated into the cover strips (3) between the wire bed base and joining face (FF).

8. Process according to one of the claims 5 to 7, characterized in that the wire bed (4) is drawn out by machining accompanied by the formation of chips, so that material displaced by the heater (5) is removed prior to the insertion thereof.

9. Process according to one of the claims 1 to 8, characterized in that use is made of a tool with which, apart from the bending up and stretching of the cover strips (3) for forming the insertion opening for the heater (5), the cover strips (3) are plastically deformed in order to obtain different closure seam constructions.

10. Process according to one of the claims 1 to 8, characterized in that the wire bed cut is part of the shape or profile of the heater (5) to be subsequently inserted.

11. Process according to one of the claims 5 to 10, characterized in that in a further process step the heater (5) is inserted in the prepared wire bed (4) and the cover strips (3) are then pressed against the wire bed (4).

12. Process according to claim 11, characterized in that the heater (5) is inserted in the wire bed (4) in a separate process step.

13. Process according to claim 10 or 11, characterized in that by pressing a cooling surface, accompanied by the simultaneous heating of the heater (5), there is a melting of the cutting points to give a closing seam, so that a substantially groove-free, smooth joining face (FF) is obtained.

14. Process according to one of the claims 1 to 13, characterized in that the cut is made symmetrically or asymmetrically to the underlying wire bed (4) from the surface of the sublevel wire bed base leading to identically or differently shaped cover strips (3).

15. Tool for producing a sublevel wire bed according to claim 1, characterized in that it has in a first blade part two superimposed, shaped cutting edges (10', 10''), which pass into a portion (11) opening the cover strips (3) formed for the planned bending up of the cut material and that in a second blade part, which does not issue into the portion (11) opening the cover strips (3), it has a machining shoulder (40) with a chip disposal channel (14).

16. Tool according to claim 15, characterized in that it has a follow-up part or is combined with a follow-up tool for inserting the heater (5), which has an opening wedge with a piece (16), opening faces (15) and a curved wire guide (17).

17. Tool according to claim 16, characterized in that, along its path, the curved wire guide (17) is open on one side and has wire retention means.

18. Article with a welded connection having a wire bed (4) according to the process of one of the claims 1 to 14, the joining face (FF) being smooth and groovefree and has a melt seam (8) running along the insertion line of the heater (5) not or only insignificantly projecting over the joining face (FF).

19. Article according to claim 18, characterized in that in the vicinity of the heater (5) a melt seam (7, 7') corresponding to the sublevel wire bed face can be rendered visible.

20. Article according to claim 18 or 19, characterized in that the article is an electric or arc welding sleeve and the melt seam (8) passes spirally over the joining face (FF) or along the sublevel wire bed.

## Revendications

1. Procédé de fabrication, dans un matériau thermoplastique, d'une zone thermo-électriquement soudable, laquelle zone thermo-électriquement soudable est générée par un conducteur chauffant (5) que l'on pose dans un chemin de câble (4) réalisé par incision dans le matériau thermoplastique, caractérisé en ce qu'on découpe dans le matériau le fond d'un chemin de câble noyé en découpant à l'aide d'un outil approprié et à la profondeur souhaitée sous la face de jointage (FF) une incision qui s'étend en deux plans et en conduisant la découpe en suivant le profil de la surface le long de la ligne de pose d'un conducteur chauffant (5), tandis que, au moyen du même outil, on replie vers le haut le long du tracé de coupe les pans (3) ainsi formés, ce qui a pour effet la constitution d'une fourche ouverte pouvant être recouverte par le fond du chemin de câble noyé, en ce que dans ce fond noyé l'on façonne le chemin de câble (4) destiné à recevoir un câble chauffant qui sera introduit ultérieurement, en ce qu'après la pose du câble chauffant on replie les pans (3) afin de refermer la fourche et les assembler par fusion afin d'obtenir une face de jointage (FF) qui ne présente pratiquement ni fentes, ni rigoles.

2. Procédé selon la revendication 1, caractérisé en ce que l'on réalise un fond pour chemin de câble noyé par une incision s étendant en deux plans, sensiblement en forme de T inversé ou de L.

3. Procédé selon la revendication 1 ou 2, caractérisé en ce que l'on incise un fond plat pour chemin de câble profondément sous la surface.

4. Procédé selon la revendication 1 ou 2, caractérisé en ce que profondément sous la surface on découpe un fond pour chemin de câble de forme courbe ou polygonale.

5. Procédé selon l'une des revendications 1 à 4, caractérisé en ce que le chemin de câble (4) est découpé, lors d'une opération consécutive, à l'aide d'un autre outil dans le fond noyé qui a été découpé précédemment.

6. Procédé selon l'une des revendications 1 à 4, caractérisé en ce que lors de la constitution du fond noyé pour chemin de câble, on découpe en même temps un chemin de câble (4) dans ledit fond.

7. Procédé selon l'une des revendications 1 à 4, caractérisé en ce que le chemin de câble (4) est découpé entre le fond et la face de jointage (FF) dans les pans (3).

8. Procédé selon l'une des revendications 5 à 7, caractérisé en ce que le chemin de câble (4) est réalisé par usinage avec enlèvement de copeaux et formation de copeaux, ce qui a pour effet d'éliminer, avant la pose, le matériau qui, sinon, aurait été repoussé par le conducteur chauffant (5).

9. Procédé selon l'une des revendications 1 à 8, caractérisé en ce que l'on utilise un outil au moyen duquel on exécute, non seulement le repli vers le haut et l'érection des pans (3) en vue de former une ouverture de pose pour le conducteur chauffant (5), mais aussi la déformation plastique desdits pans (3), afin d'obtenir une cicatrice de fermeture présentant des configurations variées.

10. Procédé selon l'une des revendications 1 à 8, caractérisé en ce que la découpe du chemin de câble présente une partie de la forme ou du profil du conducteur chauffant (5) qui sera posé ultérieurement.

11. Procédé selon l'une des revendications 5 à 10, caractérisé en ce qu'au cours d'une étape ultérieure du procédé, on pose le conducteur chauffant (5) dans le chemin de câble préparé (4) et que l'on presse immédiatement ensuite les pans (3) contre ledit chemin de câble (4).

12. Procédé selon l'une des revendications 11, caractérisé en ce que l'on pose le conducteur chauffant (5) dans le chemin de câble (4) au cours d'une étape du procédé séparé du reste des opérations.

13. Procédé selon la revendication 10 ou 11, caractérisé en ce que l'on réalise une cicatrice de fermeture en appliquant sous pression une face réfrigérante et en chauffant simultanément le câble chauffant (5) afin d'obtenir la fusion des points de découpe, ce qui a pour effet la constitution d'une face de jointage (FF) sensiblement exempte de toute fente ou rainure.

14. Procédé selon l'une des revendications 1 à 13, caractérisé en ce que l'incision entre la surface et le fond noyé du chemin de câble est symétrique ou asymétrique par rapport au chemin de câble (4) placé dessous, ce qui a pour effet de générer des pans (3) dont les formes sont identiques ou différentes.

15. Outil pour la réalisation d'un chemin de câble noyé selon la revendication 1, caractérisé en ce que cet outil présente, dans une première partie à lames, deux arêtes coupantes (10', 10'') superposées et moulées l'une sur l'autre, lesquelles se transforment en une partie (11) ouvrant les pans (3) formés dans le matériau découpé afin de les replier vers le haut, et en ce que ledit outil, dans une deuxième partie à lames qui ne débouche pas dans la partie (11) ouvrant les pans (3), présente un embout d'enlèvement de copeaux (40) muni d'un canal d'évacuation de copeaux (14).

16. Outil selon la revendication 15, caractérisé en ce qu'il présente une partie complémentaire ou bien est combiné à un outil complémentaire pour la pose du conducteur chauffant (5), lequel présente une clavette d'ouverture munie d'une lame (16) et des faces d'ouverture (15) ainsi qu'un guidage de câble (17) courbe.

17. Outil selon la revendication 16, caractérisé en ce que le guidage de câble (17) courbe est ouvert d'un seul côté le long de son trajet, et présente éventuellement des moyens de retenue pour le câble.

18. Objet muni d'une soudure qui présente un chemin de câble (4) conforme au procédé objet de l'une des revendications 1 à 14, la face de jointage (FF) étant lisse et exempte de toute rainure, et présentant une cicatrice de fusion (8) qui s'étend le long de la ligne de pose du conducteur chauffant (5) sans pratiquement faire saillie sur la face de jointage (FF).

19. Objet selon la revendication 18, caractérisé en ce que dans la zone du conducteur chauffant (5), il est possible de rendre visible une cicatrice de fusion (7, 7') qui correspond à la surface du chemin de câble noyé.

20. Objet selon la revendication 18 ou 19, caractérisé en ce que cet objet est un manchon soudé électriquement et en ce que la cicatrice de fusion (8) s'étend en forme de spirale sur la face de jointage (FF), c'est-à-dire le long du parcours du chemin de câble noyé.
